# FASCICULE DE BREVET EUROPEEN

(11) **EP 3 164 285 B1**
(45) Date de publication et mention de la délivrance du brevet: **01.08.2018**
(21) Numéro de dépôt: 15742345.0
(22) Date de dépôt: 25.06.2015
(51) Int. Cl.: B60K 6/387, B60K 6/442, B60K 6/52, B60W 10/02, B60W 10/08, B60W 20/00

(54) **PROCEDE DE COMMANDE DE SYSTEME DE MOTORISATION HYBRIDE, POUR UN VEHICULE HYBRIDE**
VERFAHREN ZUR STEUERUNG EINES HYBRIDANTRIEBSSYSTEMS FÜR EIN HYBRIDFAHRZEUG
METHOD FOR CONTROLLING A HYBRID DRIVE SYSTEM, FOR A HYBRID VEHICLE

(30) Priorité: 04.07.2014 FR 1456423
(43) Date de publication de la demande: 10.05.2017
(73) Titulaire: PSA Automobiles SA, 78300 Poissy (FR)
(72) Inventeur: MILHAU, Yohan, 78400 Chatou (FR); LEBORGNE, Ludmila, F-92350 Le Plessis Robinson (FR); KOUKI, Najib, F-78180 Montigny Le Bretonneux (FR)
(86) Numéro de dépôt international: PCT/FR2015/051710
(87) Numéro de publication internationale: WO 2016/001534

(56) Documents cités:
- EP-A1- 2 123 498
- WO-A1-2014/064371
- WO-A1-2014/087097
- FR-A1- 2 954 254
- FR-A1- 2 996 510
- US-A- 6 008 606

## Description

La présente invention est relative à un procédé de commande de système de motorisation hybride, pour un véhicule hybride.

Plus particulièrement, l'invention concerne un procédé de commande de système de motorisation hybride, pour un véhicule hybride comportant première une chaîne de traction, par exemple une chaîne de traction avant, ayant au moins un moteur thermique et un système de deuxième train roulant à hybridation, par exemple un train arrière à propulsion électrique. Elle concerne aussi un système de motorisation ayant un dispositif de pilotage configuré pour commander le moteur thermique et la propulsion d'hybridation par exemple électrique.

Le document WO 2014/087097 décrit un procédé tel que défini par le préambule de la revendication 1. Le document FR2927849A1 divulgue un procédé de commande de système de motorisation hybride, pour un véhicule hybride. Dans ce document, des seuils sont considérés pour le couplage ou le découplage de machine électrique, par exemple au regard de la vitesse du véhicule ou de la décélération du véhicule. Certains aspects de commandes méritent d'être considérés outre ceux divulgués dans ce document. Des contraintes sont en particulier à considérer pour optimiser l'efficacité énergétique du véhicule au regard de son agrément de roulage.

La présente invention a notamment pour but d'améliorer les solutions connues et/ou de proposer une solution alternative.

A cet effet, l'invention a pour objet un procédé de commande de système de motorisation hybride, pour un véhicule hybride comportant un train roulant avant, un train roulant arrière, une première chaîne de traction ayant au moins un moteur thermique pour entraîner des premières roues motrices d'un premier train roulant parmi lesdits trains roulants et un système de deuxième train roulant d'hybridation parmi lesdits trains roulants. Dans une stratégie de commande de couplage et de découplage adaptée à un dispositif de crabotage interposé entre une machine d'hybridation et des deuxièmes roues motrices du deuxième train roulant à hybridation, intervient une étape de demande brute d'ouverture de crabots du dispositif de crabotage puis soit une étape de validation de l'ouverture des crabots, soit une étape d'interdiction de l'ouverture des crabots, en fonction respectivement d'une situation de couplage ou d'une situation de découplage de la première chaîne de traction de manière que cette chaîne de traction et le système de deuxième de train roulant ne puissent être simultanément en roue libre quand le véhicule est en mouvement.

Dans divers modes de réalisation du procédé selon l'invention, on peut éventuellement avoir recours en outre à l'une et/ou à l'autre des dispositions suivantes :
- après l'étape de demande brute d'ouverture de crabots, la situation de couplage ou la situation de découplage de la première chaîne de traction est vérifiée dans une étape de vérification d'état de la première chaîne de traction de manière que, quand cette vérification spécifie que la première chaîne de traction est en situation de couplage, l'étape de validation de l'ouverture des crabots intervient, en correspondant au découplage dans le dispositif de crabotage, et de manière que, quand ladite vérification spécifie que la première chaîne de traction est en situation de découplage, l'étape d'interdiction de l'ouverture des crabots intervient, en correspondant au maintien de couplage dans le dispositif de crabotage ;
- après l'étape de demande brute d'ouverture des crabots et avant l'étape de vérification d'état de la première chaîne de traction, une étape de contrôle de l'état des crabots survient pour savoir si le dispositif de crabotage est couplé avec ses crabots à un état fermé ou si le dispositif de crabotage est découplé avec ses crabots à un état ouvert, d'une part l'étape de validation de l'ouverture des crabots intervenant quand le contrôle spécifie que les crabots sont à leur état ouvert et d'autre part l'étape de vérification d'état de la première chaîne de traction intervenant quand ledit contrôle spécifie que les crabots sont à leur état fermé ;
- dans une phase de commande de fin de mission d'hybridation active pour le moteur thermique, une requête de ladite fin de mission est suivie par une étape à laquelle il est effectué une vérification d'état de la première chaîne de traction et à laquelle il est spécifié si la première chaîne de traction est en situation de couplage ou en situation de découplage, comme lors de l'étape de vérification d'état de la première chaîne de traction intervenant après l'étape de demande brute d'ouverture de crabots ;
- après l'étape de vérification d'état de la première chaîne de traction, une étape de contrôle de l'état des crabots survient pour savoir si le dispositif de crabotage est couplé avec ses crabots à leur état fermé ou si le dispositif de crabotage est découplé avec ses crabots à leur état ouvert, comme dans le cas de l'étape de contrôle de l'état des crabots énoncée précédemment ;
- une étape de maintien d'hybridation active survient quand l'étape de contrôle de l'état des crabots spécifie que les crabots sont à leur état ouvert ;
- une étape d'arrêt d'hybridation active survient quand l'étape de contrôle de l'état des crabots spécifie que les crabots sont à leur état fermé ou quand l'étape de vérification d'état de la première chaîne de traction spécifie que cette chaîne de traction est en situation de découplage ;
- pour la première chaîne de traction ayant son moteur thermique associé d'une part à un embrayage ou un convertisseur de couple et d'autre part à une boîte de vitesses reliée aux premières roues motrices du premier train roulant, en cas de changement de rapport de démultiplication lors de la détermination de la situation de couplage ou de la situation de découplage de la première chaîne de traction, cette chaine de traction est cependant considérée comme couplée même si une rupture momentanée de couple intervient pendant le changement de rapport.

Par ailleurs, l'invention a également pour objet un système de motorisation hybride pour un véhicule hybride à train roulant avant et train roulant arrière, comprenant d'une part un groupe motopropulseur pourvu d'un moteur thermique adapté à être relié à des premières roues motrices d'un premier train roulant parmi lesdits trains roulants dans une première chaîne de traction et d'autre part une machine d'hybridation reliée à un dispositif de crabotage adapté à être interposé entre ladite machine d'hybridation et des deuxièmes roues motrices d'un système de deuxième train roulant parmi lesdits trains roulants. Le système comprend en outre un système de supervision configuré pour commander ledit moteur et ladite machine en mettant en oeuvre le procédé conforme à l'invention de manière que la première chaîne de traction et le système de deuxième train roulant ne puissent être simultanément en roue libre quand le véhicule est en mouvement. Dans un mode de réalisation de ce système la machine d'hybridation est une machine électrique.

D'autres buts, caractéristiques et avantages de l'invention apparaîtront au cours de la description suivante principalement d'un mode de réalisation, donné à titre d'exemple non limitatif, en regard des dessins joints dans lesquels :
- la figure 1 est un schéma d'architecture d'un véhicule hybride permettant de mettre en oeuvre le procédé selon l'invention de commande de système de motorisation hybride ;
- la figure 2 est un diagramme illustrant l'environnement de stratégie de commande pour le procédé selon l'invention ;
- la figure 3 et la figure 4 sont des organigrammes illustrant des étapes du procédé selon l'invention.

Sur les différentes figures, les mêmes références désignent des éléments identiques ou similaires.

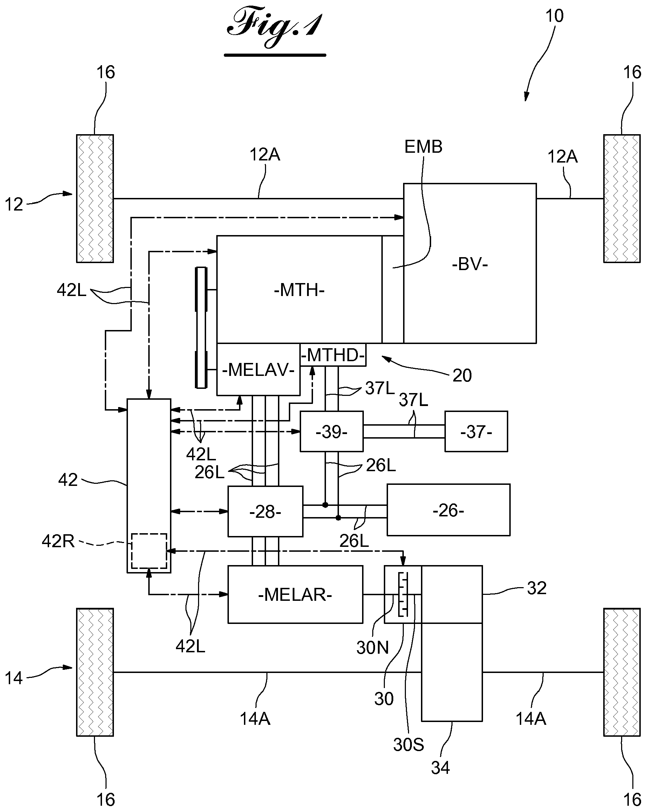

En se reportant aux figures, la référence 10 désigne un véhicule selon l'invention, comprenant un premier train roulant, en l'espèce un train avant 12, et un deuxième train roulant, en l'espèce un train arrière 14. Chacun des trains roulants est pourvu de roues 16 pouvant être motrices suivant les situations de roulage. La figure 1 montre un exemple d'architecture du véhicule hybride 10 auquel l'invention peut s'appliquer.

Des arbres de transmission avant 12A du train avant 12 sont prévus pour être entraînés en rotation par un groupe motopropulseur avant 20. Le groupe motopropulseur avant 20 comprend un moteur thermique MTH lié à une boîte de vitesses BV par l'intermédiaire d'un embrayage EMB, les arbres de transmission avant 12A étant en sortie de la boîte de vitesses BV. En outre, le groupe motopropulseur avant 20 comprend un démarreur MTHD associé au moteur thermique MTH qui est aussi couplé à une machine électrique avant MELAV pouvant agir pour mouvoir le véhicule.

La machine avant MELAV comporte un moteur électrique alimenté en basse tension par une batterie basse tension 26, via un onduleur 28. Cette machine et cette batterie sont suffisamment puissantes pour pouvoir entraîner à rotation les roues 16 du train avant 12 du véhicule hybride.

Les roues 16 du train arrière 14 du véhicule hybride 10 peuvent être entraînées par une machine d'hybridation principale, en l'espèce une machine arrière MELAR comportant un moteur électrique à basse tension relié à des arbres de transmission arrière 14A du train arrière 14 par l'intermédiaire d'un dispositif de crabotage 30, d'un réducteur 32 et d'un différentiel 34. Le moteur électrique de la machine arrière MELAR est connecté électriquement à l'onduleur 28, lui-même alimenté par la batterie basse tension 26, cet ensemble formant, avec la machine avant MELAV et des câbles électriques 26L un réseau basse tension au sein du véhicule hybride.

Le dispositif de crabotage 30 comporte une entrée 30N à organe tournant pourvu de crabots, cette entrée étant reliée à rotation au rotor de la machine électrique tournante arrière MELAR. Le dispositif de crabotage 30 comporte une sortie 30S à organe tournant pourvu de crabots, cette sortie étant reliée à rotation aux arbres de transmission 14A des roues 16 du train arrière par l'intermédiaire du réducteur 32 et du différentiel 34 qui répartit le couple sur ces deux arbres des roues motrices arrière.

Par ailleurs, le démarreur MTHD est relié à une batterie très basse tension 37 au travers d'un convertisseur 39 de basse tension et de très basse tension. Des liaisons 37L relient la batterie très basse tension 37, le convertisseur 39 et le démarreur MTHD. D'autre part, la batterie très basse tension 37 est elle-même reliée au réseau basse tension du véhicule hybride par certaines des liaisons 26L pouvant alimenter ledit convertisseur. La batterie très basse tension 39 peut recevoir en cas de besoin, via le convertisseur, de l'énergie provenant de la batterie basse tension 26 servant normalement pour les machines électriques de traction.

Un système de supervision 42 de la chaîne de traction coordonne le fonctionnement de la motorisation par le groupe moto propulseur avant 20 et la machine électrique arrière MELAR, via des liaisons de données commande 42L. Ces liaisons 24L sont représentées en traits mixtes à la figure 1. Le système de supervision 42 permet de décider du mode de roulage en répartissant la puissance à obtenir en fonction des demandes du conducteur, afin d'obtenir une optimisation des points de fonctionnement qui permet notamment de réduire la consommation d'énergie et les émissions de gaz polluants. Dans le système de supervision 42, seul un dispositif de pilotage de couple 42R de la machine électrique arrière MELAR est représenté en traits pointillés. Le dispositif de pilotage de couple 42R est par exemple un calculateur.

Le système de supervision 42 peut comprendre des calculateurs différents pour le fonctionnement du moteur MTH, de la boîte de vitesses BV, des machines électriques et leurs alimentations, en ayant éventuellement des boîtiers séparés pour les différents calculateurs. Les liaisons 42L de transmission de données de commande sont symbolisées par principe. De manière générale, le système de supervision 42 gère le fonctionnement de la mise en mouvement du véhicule, en gérant en particulier la robotisation de la machine électrique arrière et du dispositif de crabotage de manière à optimiser les consommations d'énergie et assurer d'avoir du couple aux roues aussitôt que possible en fonction des demandes du conducteur.

Comme il ressort de la figure 1, l'architecture hybride du véhicule 10 permet un découplage total entre le train avant 12 et le train arrière 14. Le véhicule hybride 10 peut ainsi fonctionner dans différents modes de roulage avec un système de motorisation hybride comprenant au moins le moteur thermique MTH, la boîte de vitesses BV et les machines électriques.

Ces modes de roulages comprennent en particulier un mode électrique, souvent qualifié de « zéro émission » en référence à l'absence d'émission de gaz d'échappement et noté ZEV en abréviation, dans lequel le moteur thermique MTH est arrêté, dans lequel la machine électrique arrière MELAR est utilisée pour mouvoir le véhicule et la boîte de vitesses BV est au point mort.

Ces modes de roulages comprennent un mode hybride minimisant la consommation en optimisant le fonctionnement du moteur thermique MTH, de la boîte de vitesses BV et des machines électriques.

Ces modes de roulages comprennent aussi un mode quatre roues motrices permettant de maximiser la tenue de route du véhicule. Dans ce mode quatre roues motrices, la machine électrique arrière MELAR est utilisée pour mouvoir le véhicule et aussi le moteur thermique MTH aidé le cas échéant de la machine électrique avant MELAV pour optimiser les performances, en particulier de motricité, et la consommation.

Ces modes de roulages comprennent aussi un mode sport qui favorise la performance du véhicule. Dans ce mode sport, suivant les conditions de route, peuvent être utilisés pour mouvoir le véhicule la machine électrique arrière MELAR et/ou le moteur thermique MTH aidé le cas échéant de la machine électrique avant MELAV pour optimiser les performances.

Divers paramètres entrent en ligne de compte pour que soit décidé si les roues motrices 16 du train arrière 14 sont accouplées ou sont découplées de la machine arrière MELAR via le dispositif de crabotage. De manière générale, le couplage de la machine arrière MELAR est piloté pour minimiser la consommation d'énergie fossile et pour accroitre les performances du véhicule afin de combiner l'énergie électrique à l'énergie thermique pour déplacer le véhicule.

Ces paramètres incluent la prise en compte de la consommation électrique de la machine arrière MELAR en couple de perte, quand cette machine arrière est accouplée et qu'elle ne travaille pas pour apporter de l'énergie motrice aux roues motrices arrière. Cette consommation résultant du couple à vide est croissante avec le régime du moteur et elle dépend donc de la vitesse du véhicule en pouvant par exemple atteindre 1,3 kilowatt à une vitesse du véhicule de 120 km/h. Ces paramètres incluent également la prise en compte du régime de la machine arrière MELAR qui a un régime maximal à partir duquel un découplage est nécessaire afin d'éviter de l'endommager. Par exemple, il s'agit d'un régime correspondant à une vitesse du véhicule de 120 km/h.

De manière générale, le couplage de la machine arrière MELAR intervient aussi dans divers cas tels que ceux énoncés ci-après. Le couplage intervient lorsque la volonté du conducteur devient négative, en frein moteur avec relâchement de la pédale d'accélérateur, afin d'accroitre la récupération d'énergie sous certaines conditions. Le couplage intervient lorsque la volonté du conducteur devient positive, sous certaines conditions dont certaines ont déjà été décrites et d'autres seront décrites ultérieurement. Pour cette volonté positive du conducteur avec enfoncement plus ou moins marqué de la pédale d'accélérateur, il s'agit de réaliser la consigne de couple optimale sur chaque source motrice constituée par le moteur thermique MTH, la machine électrique avant MELAV et la machine électrique arrière MELAR et ce pour minimiser la consommation d'énergie fossile du véhicule. Le couplage intervient lorsque le moteur thermique est saturé en couple maximal ou minimal afin d'améliorer les performances globales du véhicule. Par railleurs le couplage peut intervenir par exemple en fonction de la pente. Le couplage peut également intervenir par exemple en fonction de l'accélération latérale du véhicule. Le couplage peut encore intervenir par exemple en fonction de l'angle au volant.

Pour commander le système de motorisation il est procédé au pilotage du couple à délivrer par chaque source motrice constituée par le moteur thermique MTH, la machine électrique avant MELAV et la machine électrique arrière MELAR. Dans les éléments de commande, il va être introduit une stratégie de mise en cohérence du couplage du train avant avec le couplage du train arrière.

La stratégie permet d'éviter que la chaîne de traction sur le train avant et la chaîne de traction sur le train arrière soient ouvertes simultanément quand le véhicule roule, afin d'éviter un roulage en roue libre. En effet, en cas de roulage en roue libre, un délai minimum est nécessaire pour que du couple soit à nouveau disponible pour les roues motrices. Ce délai minimum peut varier entre 300 millisecondes et 2 secondes, en fonction de la source motrice et du type de couplage entre cette source et les roues du véhicule. Par exemple, ce délai dépend de la rapidité d'action de l'embrayage EMB associé au moteur thermique MTH et à la boîte de vitesses. Par exemple, ce délai dépend de la rapidité d'action du dispositif de crabotage 30. D'un point de vue prestation, il est donc très intéressant de laisser toujours une source motrice couplée aux roues sans pour autant pénaliser fortement le rendement global du véhicule hybride.

Le procédé selon l'invention va tendre à assurer de toujours disposer d'une source motrice disponible quand c'est nécessaire. Il s'agit de prendre en compte l'arrivée rapide de couple aux roues motrices et de prendre en compte également le couple à vide de la machine électrique arrière MELAR pour éviter de maintenir la machine électrique couplée en permanence. En effet, laisser la machine électrique couplée soit en permanence, soit quand ce n'est pas nécessaire sur le train arrière, serait susceptible d'engendrer une consommation électrique non négligeable par exemple de plusieurs kilowatts, se traduisant au global par de la consommation supplémentaire de carburant fossile. Ces éléments sont sous-jacents dans le procédé de commande du système de motorisation pour le choix du point de fonctionnement déterminé en temps réel lors du fonctionnement du véhicule.

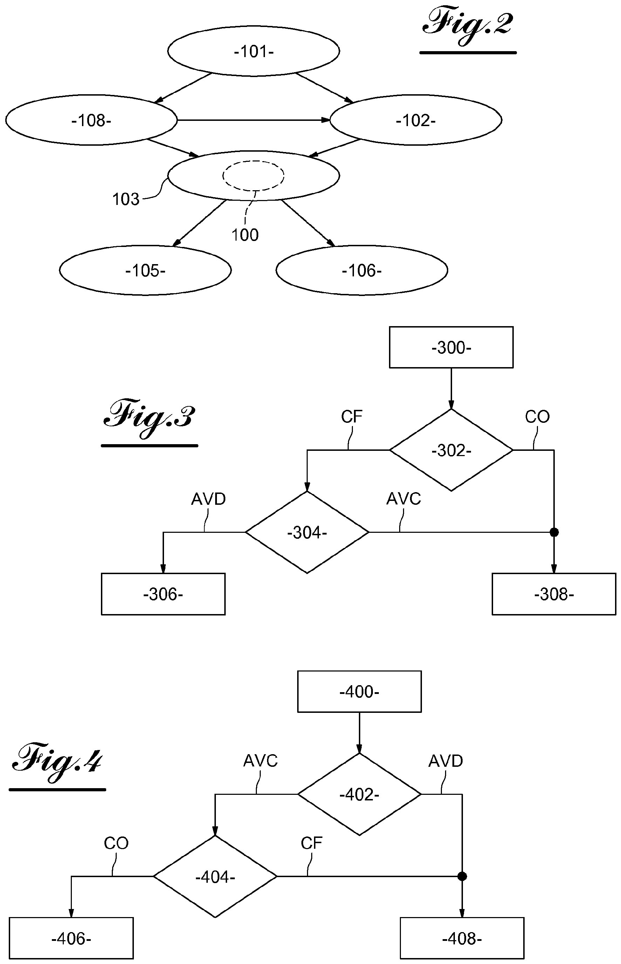

Dans le procédé de commande du système de motorisation, il est opéré en temps réel un choix du point de fonctionnement, selon des stratégies de commande qui comprennent le procédé selon l'invention de commande de système de motorisation hybride. Le choix du point de fonctionnement est symbolisé par la bulle référencée 103 dans le diagramme de la figure 2. Ce choix intervient dans l'environnement géré au moins partiellement par le système de supervision 42. L'environnement comprend les conditions d'utilisation du véhicule et divers procédés de commandes gérés par le système de supervision qui sont schématisés à la figure 2. A cette figure, dans la bulle de choix du point de fonctionnement 103, ledit procédé selon l'invention est symbolisé par une bulle référencée 100.

La liste ci-dessous, en relation avec la figure 2, permet de faire la relation entre le choix du point de fonctionnement 103 et l'environnement représenté sous forme de bulles qui sont reliées par des flèches de partage d'information.
- La référence 101 est relative à l'interface de la volonté du conducteur via par exemple la pédale d'accélérateur et d'autres interfaces, permettant de récolter les informations du véhicule.
- La référence 102 est relative à la traduction de la volonté d'accélérer du conducteur en consigne de couple aux roues, permettant de calculer la consigne de couple que désire le conducteur.
- La référence 103 est relative à la stratégie de choix de point de fonctionnement avec la répartition de couple entre les différentes sources de couple, permettant en particulier de calculer la consigne finale de couple de la machine électrique arrière MELAR.
- La référence 105 est relative à la gouvernance du couple au train avant 12 en incluant la gestion du moteur thermique MTH, de la boite de vitesses BV et de la machine électrique avant MELAV.
- La référence 106 est relative à la gouvernance du couple au train arrière 14 en incluant la gestion de la machine électrique arrière MELAR, qui est la machine électrique principale, en incluant la gestion du dispositif 30 de crabotage, permettant de gérer ses actionneurs d'accouplement et de découplage.
- La référence 108 est relative à la gestion des limitations organiques pour éviter des conditions trop sévères d'utilisation telles que par exemple le découplage de la machine arrière MELAR quand la vitesse du véhicule dépasse 120 km/h.

La stratégie 103 de choix de point de fonctionnement, comprenant le procédé 100 contribuant à la commande de couplage et de découplage, intervient directement en amont d'une part de la gouvernance 105 du couple au train avant et d'autre part de la gouvernance 106 du couple au train arrière. Elle intervient en aval d'une part de la traduction 102 de la volonté du conducteur en consigne de couple aux roues et d'autre part de la gestion 108 des limitations organiques qui permet un fonctionnement des organes de propulsion du véhicules dans des conditions ne mettant pas en péril leur intégrité. L'interface 101 de la volonté du conducteur est en amont d'une part de la traduction 102 de la volonté du conducteur en consigne de couple aux roues et d'autre part de la gestion 108 des limitations organiques. Un lien d'information est entre la traduction 102 de la volonté du conducteur en consigne de couple aux roues et la gestion 108 des limitations organiques.

Différentes conditions de consigne initiales interviennent dans le procédé 100 pour que le couplage du train arrière 14 puisse être demandé dans le système de supervision 42 et en particulier dans son dispositif de pilotage de couple 42R. Les consignes résultant du fonctionnement du véhicule et de la volonté du conducteur vont maintenant être détaillées, en tenant compte des consignes influençant le procédé selon l'invention.

Pour gérer le couplage ou le découplage de la machine électrique arrière MELAR via le dispositif de crabotage 30, en évitant que le véhicule roule en roue libre, l'état du moteur thermique MTH à l'arrêt ou en marche ou en démarrage est pris en compte. Quand le moteur thermique est à son état à l'arrêt, le déplacement du véhicule est assuré uniquement par la machine électrique arrière qui est couplée au train arrière.

Deux types de démarrage du moteur thermique MTH sont considérés suivant les consignes.

Pour le premier type de démarrage du moteur thermique, ce démarrage est effectué avec une interdiction d'utiliser le moteur thermique pour tracter le véhicule qui est en fonctionnement de véhicule hybride série. Le déplacement du véhicule est assuré uniquement par la machine électrique arrière MELAR et le moteur thermique est utilisé avec une mission de motorisation annexe en étant passif au regard des arbres de transmission 12A et des roues du train avant.

Pour le second type de démarrage du moteur thermique, ce démarrage est effectué avec possibilité de tracter le véhicule par le moteur thermique. Dans ce cas, le véhicule est en mode de roulage hybride utilisant l'énergie du moteur thermique et des machines électriques. La répartition spécifique de couple est déterminée par une fonction d'optimisation énergétique afin de minimiser la consommation de carburant, selon des principes qui ont déjà été énoncés dans leur généralité. Si une consigne de couple est demandée sur le train avant, alors le moteur thermique sera en charge de fournir du couple via la chaîne de traction à l'avant du véhicule, via l'embrayage et la boîte de vitesses en particulier. Le moteur thermique MTH est donc utilisé avec une mission d'hybridation active.

L'état d'arrêt du moteur thermique est qualifié d'exclusif car le moteur se trouve à cet état d'arrêt lorsqu'il n'y a pas de démarrage et que le premier type de démarrage tout comme le second type de démarrage ne sont pas demandés.

En cas de demande de démarrage simultané suivant le premier type ou le second type, alors le démarrage final sera choisi sera conformément au second type de démarrage du moteur thermique.

Le premier type de démarrage sera choisi par exemple lorsqu'un besoin en énergie est demandé par un appareil de climatisation du véhicule.

Le second type de démarrage sera choisi par exemple quand le moteur thermique MTH doit tourner pour entraîner un alternateur qui recharge la batterie basse tension 26 pendant que le niveau de stockage de cette dernière est relativement bas et que la machine électrique arrière MELAR devra plus souvent être secondée par le moteur thermique si la batterie arrive à faible autonomie. Le second type de démarrage sera choisi par exemple quand un système de contrôle de trajectoire du véhicule, souvent dénommée ESP dans le milieu de l'automobile, émet une requête ne nécessité de motricité du véhicule par le train avant. Le second type de démarrage sera choisi par exemple quand il est nécessaire de protéger divers organes du véhicule en fonction de leurs contraintes de fonctionnement, cet organe pouvant être la batterie basse tension 26, la machine électrique arrière MELAR ou autres organes dont le fonctionnement doit être soulagé pour assurer les performances du véhicule demandé par le conducteur ou résultant des conditions de circulation telle que des conditions météorologiques.

Il va être maintenant considéré d'une part que le train arrière et la machine électrique arrière sont reliés via un dispositif de crabotage comme décrit en relation avec la figure 1 et d'autre part que la boîte de vitesses est de type robotisée en ayant une architecture de boîte manuelle pilotée associée par exemple à un double embrayage. Il est pris pour hypothèse que chacune des sources de motorisation peut mouvoir le véhicule de façon indépendante et peut être découplée de son train roulant.

Dans le procédé de commande de système de motorisation hybride, il est opéré des étapes consécutives à une demande brute d'ouverture des crabots dans le dispositif de crabotage 30. La demande brute d'ouverture des crabots est référencée 300 à la figure 3. L'état du crabot est qualifié de fermé lorsque le dispositif de crabotage peut transmettre du couple. L'état ouvert est le complément de l'état fermé, sans transmission de couple.

Après l'étape 300 de demande brute d'ouverture des crabots, une étape de contrôle est effectuée pour savoir si le dispositif de crabotage 30 est couplé avec les crabots à leur état fermé ou si le dispositif de crabotage est découplé avec les crabots à leur état ouvert. Cette étape de contrôle de l'état des crabots est référencée 302 à la figure 3. Quand ce contrôle spécifie que les crabots sont à leur état ouvert CO, intervient une étape 308 de validation de l'ouverture des crabots, correspondant au découplage dans le dispositif de crabotage.

Quand ledit contrôle spécifie que les crabots sont à leur état fermé CF, intervient une étape de vérification d'état de la chaîne de traction avant, cette étape de vérification étant référencée 304 à la figure 3. Quand cette vérification spécifie que la chaîne de traction avant est en situation de couplage AVC, intervient l'étape 308 de validation de l'ouverture des crabots, correspondant au découplage dans le dispositif de crabotage. Quand ladite vérification spécifie que la chaîne de traction avant est en situation de découplage AVD, intervient une étape 306 d'interdiction de l'ouverture des crabots correspondants au maintien de couplage dans le dispositif de crabotage.

Par ailleurs, dans le procédé de commande de système de motorisation hybride, il est opéré des étapes consécutives à une requête de fin de second type de démarrage du moteur thermique. Cette requête est référencée 400 à la figure 4. Cette requête correspond à une fin de nécessité d'utilisation du moteur thermique MTH pour mouvoir le véhicule, pour la fin de mission du moteur thermique en hybridation active. Dans ce cas, c'est bien la machine électrique arrière MELAR qui va devoir oeuvrer avec disponibilité immédiate pour mouvoir le véhicule quand le moteur thermique est éteint ou découplé du train avant.

Après l'étape 400 de requête de fin de second type de démarrage du moteur thermique, intervient une étape 402 à laquelle, comme dans le cas de l'étape 304, il est effectué une vérification d'état de la chaîne de traction avant. L'étape 402 de vérification d'état de la chaîne de traction avant est dans une phase de commande de fin de mission d'hybridation active pour le moteur thermique. Quand la chaîne de traction avant est spécifiée en situation de découplage AVD, intervient une étape d'acceptation 408 de ladite requête de fin de second type de démarrage. Cette étape d'acceptation 408 en relation avec second type de démarrage constitue une étape d'arrêt d'hybridation active.

Quand la chaîne de traction avant est spécifiée en situation de couplage AVC, intervient une étape 404 à laquelle, comme dans le cas de l'étape 302, il est effectué un contrôle de l'état des crabots.

Toujours dans ladite phase de commande de fin de mission d'hybridation active pour le moteur thermique, quand les crabots sont contrôlés à leur état fermé CF, intervient l'étape d'acceptation 408 de la requête de fin de second type de démarrage du moteur thermique. Quand les crabots sont contrôlés à leur état ouvert CO, intervient une étape 406 de maintien de second type de démarrage du moteur thermique qui peut continuer à être rapidement utilisé pour mouvoir le véhicule. Cette étape de maintien 406 en relation avec second type de démarrage constitue une étape de maintien d'hybridation active.

La requête de fin de second type de démarrage du moteur thermique à l'étape 400 ne s'applique pas sur le simple état du moteur thermique MTH mais sur sa faculté à tracter le véhicule. Ainsi si la demande de second type de démarrage du moteur thermique est validée, la mission du moteur thermique MTH n'est alors plus de pouvoir mouvoir le véhicule car le moteur thermique passif au regard des arbres de transmission 12A et des roues du train avant. Le moteur thermique pourra alors passer à son état à l'arrêt ou à son état de premier type de démarrage pour être en marche, dans ce dernier cas sans utilisation dudit moteur pour mouvoir le véhicule.

Lors de l'étape 304 ou lors de l'étape 402 de vérification de l'état de la chaîne de traction avant, cette chaîne de traction est déclarée couplée dès lors que :
- une demande de second type de démarrage du moteur thermique est active et ;
- le moteur thermique est démarré et ;
- l'embrayage associé à la boîte de vitesses est fermé en pouvant transmettre du couple pour mouvoir le véhicule et/ou ;
- la consigne de couple sur le train avant 12 est réalisée par le groupe motopropulseur avant 20 à un décalage près de tolérance par exemple de 50Nm à la roue et/ou ;
- un temps maximal de sécurisation est présent, par exemple de 5 secondes.

Lors de l'étape 304 ou lors de l'étape 402 de vérification de l'état de la chaîne de traction avant, cette chaîne de traction est déclarée découplée dès lors que la demande de second type de démarrage du moteur thermique est inactive.

Il existe une subtilité à noter dans les conditions ci-dessus. En cas de changement de rapport de démultiplication dans la boîte de vitesses BV, la chaine de traction avant peut-être ouverte mais elle est cependant considérée comme couplée même si une rupture momentanée de couple intervient pendant le changement de rapport. Cette rupture de couple intervient pendant un court instant car le découplage de l'embrayage peut durer par exemple moins d'une seconde pendant ledit changement de rapport.

Dans le cas d'un mode de réalisation différent du groupe motopropulseur comprenant une boîte de vitesses de type automatique à la place de la boîte de vitesses de type robotisée, l'embrayage est remplacé par un convertisseur de couple. La condition ci-dessus d'embrayage fermé est remplacée par une condition de convertisseur de couple fermé en pouvant transmettre du couple pour mouvoir le véhicule. Le principe de déroulement pour déclarer la chaîne de traction avant couplé ou découplée reste donc le même.

Lors de l'étape 302 ou lors de l'étape 404 de contrôle de l'état des crabots, ces crabots sont déclarés fermés pour le couplage dans le dispositif de crabotage 30 dès lors que :
- le dispositif de crabotage est fermé à couplage et la machine électrique arrière MELAR réalise la consigne de couple à un décalage près de tolérance par exemple de 50Nm à la roue ou ;
- un temps maximal de sécurisation est présent, par exemple de 5 secondes.

Dans le procédé selon l'invention de commande de système de motorisation hybride, il est avantageusement opéré une optimisation des phases d'utilisation de la machine électrique arrière MELAR et du moteur thermique MTH afin d'une part de maximiser le rendement global du véhicule hybride et ainsi permettre au client de moins consommer d'énergie fossile mais aussi d'autre part de permettre de garder un certain niveau de dynamisme et d'agrément lors d'un roulage en mettant opérationnelle en permanence une source de motorisation pour produire du couple à la roue. En effet, les découplages de la machine électrique arrière MELAR ont des conditions particulières pour favoriser les prestations en dynamisme et en bilan énergétique.

Dans l'exemple de réalisation qui a servi pour décrire l'invention, le procédé de commande de système de motorisation hybride est pour un véhicule hybride comportant un train roulant avant associé au moteur thermique et un train roulant arrière associé à la machine électrique arrière d'hybridation. En variante non représentée, le train roulant arrière peut être associé au moteur thermique et un train roulant avant peut être associé à une machine électrique avant d'hybridation. De manière générale, le véhicule hybride présente une première chaîne de traction ayant au moins un moteur thermique pour entraîner des premières roues motrices d'un premier train roulant parmi lesdits trains roulants et un système de deuxième train roulant d'hybridation parmi lesdits trains roulants. Dans la stratégie de commande de couplage et de découplage adaptée au dispositif de crabotage 30 interposé entre la machine d'hybridation, telle que la machine électrique arrière selon l'exemple illustré, et des deuxièmes roues motrices du deuxième train roulant à hybridation, intervient l'étape 300 de demande brute d'ouverture de crabots du dispositif de crabotage 30 puis soit l'étape 308 de validation de l'ouverture des crabots, soit l'étape 306 d'interdiction de l'ouverture des crabots, en fonction respectivement de la situation de couplage AVC ou de la situation de découplage AVD de la première chaîne de traction de manière que cette chaîne de traction et le système de deuxième de train roulant ne puissent être simultanément en roue libre quand le véhicule est en mouvement.

De plus, la machine électrique d'hybridation de deuxième train roulant peut, en variante, être remplacée par toute autre machine d'hybridation telle qu'une machine hydraulique ou une machine pneumatique.

## Revendications

1. Procédé de commande de système de motorisation hybride, pour un véhicule hybride comportant un train roulant avant, un train roulant arrière, une première chaîne de traction ayant au moins un moteur thermique (MTH) pour entraîner des premières roues motrices d'un premier train roulant (12) parmi lesdits trains roulants et un système de deuxième train roulant d'hybridation(14) parmi lesdits trains roulants, **caractérisé en ce que**, dans une stratégie de commande de couplage et de découplage adaptée à un dispositif de crabotage (30) interposé entre une machine d'hybridation (MELAR) et des deuxièmes roues motrices (16) du deuxième train roulant (14) à hybridation, intervient une étape (300) de demande brute d'ouverture de crabots du dispositif de crabotage (30) puis soit une étape (308) de validation de l'ouverture des crabots, soit une étape (306) d'interdiction de l'ouverture des crabots, en fonction respectivement d'une situation de couplage (AVC) ou d'une situation de découplage (AVD) de la première chaîne de traction de manière que cette chaîne de traction et le système de deuxième de train roulant ne puissent être simultanément en roue libre quand le véhicule est en mouvement.

2. Procédé selon la revendication précédente, **caractérisé en ce que**, après l'étape (300) de demande brute d'ouverture de crabots, la situation de couplage (AVC) ou la situation de découplage (AVD) de la première chaîne de traction est vérifiée dans une étape (304) de vérification d'état de la première chaîne de traction de manière que, quand cette vérification spécifie que la première chaîne de traction est en situation de couplage (AVC), l'étape (308) de validation de l'ouverture des crabots intervient, en correspondant au découplage dans le dispositif de crabotage (30), et de manière que, quand ladite vérification spécifie que la première chaîne de traction est en situation de découplage (AVD), l'étape (306) d'interdiction de l'ouverture des crabots intervient, en correspondant au maintien de couplage dans le dispositif de crabotage.

3. Procédé selon la revendication précédente, **caractérisé en ce qu'**après l'étape (300) de demande brute d'ouverture des crabots et avant l'étape (304) de vérification d'état de la première chaîne de traction, une étape de contrôle de l'état des crabots (302) survient pour savoir si le dispositif de crabotage (30) est couplé avec ses crabots à un état fermé (CF) ou si le dispositif de crabotage est découplé avec ses crabots à un état ouvert (CO), d'une part l'étape (308) de validation de l'ouverture des crabots intervenant quand le contrôle spécifie que les crabots sont à leur état ouvert (CO) et d'autre part l'étape (304) de vérification d'état de la première chaîne de traction intervenant quand ledit contrôle spécifie que les crabots sont à leur état fermé (CF).

4. Procédé selon l'une quelconque des revendications 2 à 3, **caractérisé en ce que**, dans une phase de commande de fin de mission d'hybridation active pour le moteur thermique, une requête (400) de ladite fin de mission est suivie par une étape (402) à laquelle il est effectué une vérification d'état de la première chaîne de traction et à laquelle il est spécifié si la première chaîne de traction est en situation de couplage (AVC) ou en situation de découplage (AVD), comme lors de l'étape (304) de vérification d'état de la première chaîne de traction intervenant après l'étape (300) de demande brute d'ouverture de crabots.

5. Procédé selon la revendication précédente et la revendication 3, **caractérisé en ce qu'**après l'étape (402) de vérification d'état de la première chaîne de traction, une étape de contrôle de l'état des crabots (404) survient pour savoir si le dispositif de crabotage (30) est couplé avec ses crabots à leur état fermé (CF) ou si le dispositif de crabotage est découplé avec ses crabots à leur état ouvert (CO), comme dans le cas de l'étape de contrôle de l'état des crabots (302) selon la revendication 3.

6. Procédé selon la revendication 5, **caractérisé en ce qu'**une étape (406) de maintien d'hybridation active survient quand l'étape de contrôle de l'état des crabots (404) spécifie que les crabots sont à leur état ouvert (CO).

7. Procédé selon la revendication 5, **caractérisé en ce qu'**une étape (408) d'arrêt d'hybridation active survient quand l'étape de contrôle de l'état des crabots (404) spécifie que les crabots sont à leur état fermé (CF) ou quand l'étape (402) de vérification d'état de la première chaîne de traction spécifie que cette chaîne de traction est en situation de découplage (AVD).

8. Procédé selon l'une quelconque des revendications précédentes, **caractérisé en ce que**, pour la première chaîne de traction ayant son moteur thermique (MTH) associé d'une part à un embrayage (EMB) ou un convertisseur de couple et d'autre part à une boîte de vitesses (BV) reliée aux premières roues motrices (16) du premier train roulant (12), en cas de changement de rapport de démultiplication lors de la détermination de la situation de couplage (AVC) ou de la situation de découplage (AVD) de la première chaîne de traction, cette chaine de traction est cependant considérée comme couplée même si une rupture momentanée de couple intervient pendant le changement de rapport.

9. Système de motorisation hybride pour un véhicule hybride à train roulant avant et train roulant arrière, comprenant d'une part un groupe motopropulseur (20) pourvu d'un moteur thermique (MTH) adapté à être relié à des premières roues motrices (16) d'un premier train roulant (12) parmi lesdits trains roulants dans une première chaîne de traction et d'autre part une machine d'hybridation (MELAR) reliée à un dispositif de crabotage (30) adapté à être interposé entre ladite machine d'hybridation et des deuxièmes roues motrices (16) d'un système de deuxième train roulant (14) parmi lesdits trains roulants, le système comprenant en outre un système de supervision (42) configuré pour commander ledit moteur et ladite machine en mettant en oeuvre le procédé conforme à l'une quelconque des revendications précédentes de manière que la première chaîne de traction et le système de deuxième train roulant ne puissent être simultanément en roue libre quand le véhicule est en mouvement.

10. Système de motorisation selon la revendication précédente, dans lequel la machine d'hybridation (MELAR) est une machine électrique.

## Patentansprüche

1. Verfahren zur Steuerung eines Hybridantriebssystems für ein Hybridfahrzeug, das ein vorderes Fahrwerk, ein hinteres Fahrwerk, einen ersten Antriebsstrang, der mindestens einen Verbrennungsmotor (MTH) zum Antreiben erster Antriebsräder eines ersten Fahrwerks (12) der Fahrwerke und ein zweites Hybridisierungfahrwerksystem (14) unter den Fahrwerken umfasst, **dadurch gekennzeichnet, dass** in einer Kupplungs- und Abkupplungssteuerstrategie, die an eine Klauenkupplungsvorrichtung (30), die zwischen einer Hybridisierungsmaschine (MELAR) und zweiten Antriebsrädern (16) des zweiten Fahrwerks (14) mit Hybridisierung eingefügt ist, angepasst ist, ein Schritt (300) einer Rohanfrage zum Öffnen der Klauen der Klauenkupplungsvorrichtung (30) auftritt, dann entweder ein Schritt (308) zur Bestätigung des Öffnens der Klauen oder ein Schritt (306) zum Untersagen des Öffnens der Klauen jeweils in Abhängigkeit von einer Kupplungssituation (AVC) oder einer Abkupplungssituation (AVD) des ersten Fahrwerks derart, dass dieses Fahrwerk und das zweite Fahrwerkssystem nicht gleichzeitig in Freilauf sein können, wenn das Fahrzeug in Bewegung ist.

2. Verfahren nach dem vorhergehenden Anspruch, **dadurch gekennzeichnet, dass** nach der Rohanfrage zum Öffnen der Klauen die Kupplungssituation (AVC) oder die Abkupplungssituation (AVD) des ersten Antriebsstrangs bei einem Schritt (304) zum Prüfen des Zustands des ersten Antriebsstrangs derart geprüft wird, dass, wenn diese Prüfung spezifiziert, dass der erste Antriebsstrang in Kupplungssituation (AVC) ist, der Schritt (308) zur Bestätigung des Öffnens der Klauen entsprechend dem Abkuppeln in der Klauenkupplungsvorrichtung (30) eintritt, und derart, dass, wenn die Prüfung spezifiziert, dass der erste Antriebsstrang in Abkupplungsposition (AVD) ist, der Schritt (306) des Untersagens des Öffnens der Klauen, indem er dem Kupplungsbeibehalten in der Klauenkupplungsvorrichtung entspricht.

3. Verfahren nach dem vorhergehenden Anspruch, **dadurch gekennzeichnet, dass** nach dem Schritt (300) der Rohanfrage zum Öffnen der Klauen und vor dem Schritt (304) zur Prüfung des Zustands des ersten Antriebsstrangs, ein Schritt des Prüfens des Zustands der Klauen (302) erfolgt, um zu erfahren, ob die Klauenkupplungsvorrichtung (30) mit ihren Klauen in einem geschlossenen Zustand (CF) gekuppelt ist, oder ob die Klauenkupplungsvorrichtung mit ihren Klauen in einem offenen Zustand (CO) abgekuppelt ist, wobei einerseits der Schritt (308) zur Bestätigung des Öffnens der Klauen auftritt, wenn die Prüfung spezifiziert, dass die Klauen in ihrem offenen Zustand (CO) sind, und andererseits der Schritt (304) des Prüfens des Zustands des ersten Antriebsstrangs auftritt, wenn die Prüfung spezifiziert, dass die Klauen in ihrem geschlossenen Zustand sind (CF).

4. Verfahren nach einem der Ansprüche 2 bis 3, **dadurch gekennzeichnet, dass** in einer Steuerphase des Endes der Aufgabe der aktiven Hybridisierung für den Verbrennungsmotor, auf eine Anfrage (400) nach Ende der Aufgabe ein Schritt (402) folgt, bei dem eine Zustandsprüfung des ersten Antriebsstrangs erfolgt, und bei der spezifiziert wird, ob der erste Antriebsstrang in Kupplungssituation (AVC) oder in Abkupplungssituation (AVD) wie bei dem Schritt des Prüfens (304) des Zustands des ersten Antriebsstrangs, der nach dem Schritt (300) zur Rohanfrage nach Öffnen der Klauen ausgeführt wird, ist.

5. Verfahren nach dem vorhergehenden Anspruch und Anspruch 3, **dadurch gekennzeichnet, dass** nach dem Schritt (402) der Zustandsprüfung des ersten Antriebsstrang ein Schritt des Prüfens des Zustands der Klauen (404) auftritt, um zu erfahren, ob die Klauenkupplungsvorrichtung (30) mit ihren Klauen in ihrem geschlossenen Zustand (CF) gekuppelt ist, oder ob die Klauenkupplungsvorrichtung mit ihren Klauen in ihrem offenen Zustand (CO) abgekuppelt ist, wie bei dem Fall des Prüfschritts des Zustands der Klauen (302) nach Anspruch 3.

6. Verfahren nach Anspruch 5, **dadurch gekennzeichnet, dass** ein Schritt (406) des Beibehaltens der aktiven Hybridisierung auftritt, wenn der Schritt des Prüfens des Zustands der Klauen (404) spezifiziert, dass die Klauen in ihrem offenen Zustand (CO) sind.

7. Verfahren nach Anspruch 5, **dadurch gekennzeichnet, dass** ein Schritt (408) des Stoppens aktiver Hybridisierung auftritt, wenn der Schritt des Prüfens des Zustands der Klauen (404) spezifiziert, dass die Klauen in ihrem geschlossenen Zustand (CF) sind, oder wenn der Schritt des Prüfens (402) des Zustands des ersten Antriebsstrangs spezifiziert, dass dieser Antriebsstrang in Abkupplungssituation (AVD) ist.

8. Verfahren nach einem der vorhergehenden Ansprüche, **dadurch gekennzeichnet, dass** für den ersten Antriebsstrang, dessen Verbrennungsmotor (MTH) einerseits mit einer Kupplung (EMB) oder einem Drehmomentwandler und andererseits mit einem Schaltgetriebe (BV), das mit den ersten Antriebsrädern (16) des ersten Fahrwerks (12) verbunden ist, assoziiert ist, dieser Antriebsstrang in dem Fall des Abwärtsgangwechsels bei dem Bestimmen der Kupplungssituation (AVC) oder der Abkupplungssituation (AVD) des ersten Antriebsstrangs jedoch sogar als gekuppelt betrachtet wird, wenn eine vorübergehende Drehmomentunterbrechung während des Gangwechsels auftritt.

9. Hybridantriebssystem für ein Hybridfahrzeug mit vorderem Fahrwerk und hinterem Fahrwerk, das einerseits einen Antriebsstrang (20) umfasst, der mit einem Verbrennungsmotor (MTH) versehen ist, der angepasst ist, um mit ersten Antriebsrädern (16) eines ersten Fahrwerks (12) unter den Fahrwerken in einem ersten Antriebsstrang verbunden zu sein, und andererseits eine Hybridisierungsmaschine (MELAR), die mit einer Klauenkupplungsvorrichtung (30) versehen ist, die angepasst ist, um zwischen die Hybridisierungsmaschine und zweite Antriebsräder (16) eines zweiten Fahrwerkssystems (14) der Fahrwerke eingefügt zu werden, wobei das System außerdem ein Überwachungssystem (42) umfasst, das konfiguriert ist, um den Motor und die Maschine zu steuern, indem das Verfahren nach einem der vorhergehenden Ansprüche derart umgesetzt wird, dass der erste Antriebsstrang und das zweite Fahrwerkssystem nicht gleichzeitig in Freilauf sein können, wenn das Fahrzeug in Bewegung ist.

10. Antriebssystem nach dem vorhergehenden Anspruch, wobei die Hybridisierungsmaschine (MELAR) eine elektrische Maschine ist.

## Claims

1. A method for controlling a hybrid drive system, for a hybrid vehicle comprising a front running gear, a rear running gear, a first traction chain having at least one heat engine (MTH) for driving first driving wheels of a first running gear (12) among said running gears and a second hybridisation running gear system (14) among said running gears, **characterized in that** in a strategy to control coupling and uncoupling suited to a dog-clutching device (30) interposed between a hybridisation machine (MELAR) and second driving wheels (16) of the second hybridisation running gear (14), a raw request step (300) occurs to open dogs of the dog-clutching device (30), then either a step (308) of validating the opening of the dogs, or a step (306) of preventing the opening of the dogs, as a function respectively of a coupling situation (AVC) or an uncoupling situation (AVD) of the first traction chain, such that this traction chain and the second running gear system can not be simultaneously free-wheeling when the vehicle is in motion.

2. The method according to the preceding claim, **characterized in that**, after the raw request step (300) to open dogs, the coupling situation (AVC) or the uncoupling situation (AVD) of the first traction chain is verified in a verification step (304) of the state of the first traction chain such that, when this verification specifies that the first traction chain is in coupling situation (AVC), the validation step (308) of the opening of the dogs occurs, corresponding to the uncoupling in the dog-clutching device (30), and such that, when said verification specifies that the first traction chain is in uncoupling situation (AVD), the step (306) of preventing the opening of the dogs occurs, corresponding to the maintaining of coupling in the dog-clutching device.

3. The method according to the preceding claim, **characterized in that** after the raw request step (300) to open the dogs and before the step (304) of verification of the state of the first traction chain, a step (302) for control of the state of the dogs occurs, so as to know whether the dog-clutching device (30) is coupled with its dogs at a closed state (CF) or whether the dog-clutching device is uncoupled with its dogs at an open state (CO), on the one hand the step (308) of validation of the opening of the dogs occurs when the control specifies that the dogs are at their open state (CO) and on the other hand the step (304) of verification of the state of the first traction chain occurs when said control specifies that the dots are at their closed state (CF).

4. The method according to any one of Claims 2 to 3, **characterized in that**, in a command phase of end of active hybridisation mission for the heat engine, a request (400) of said end of mission is followed by a step (402) at which a verification is carried out of the state of the first traction chain and at which it is specified whether the first traction chain is in coupling situation (AVC) or in uncoupling situation (AVD), as during the step (304) of verification of the state of the first traction chain occurring after the raw request step (300) to open dogs.

5. The method according to the preceding claim and Claim 3, **characterized in that** after the step (402) of verification of the state of the first traction chain, a control step of the state of the dogs (404) occurs so as to know whether the dog-clutching device (30) is coupled with its dogs at their closed state (CF) or whether the dog-clutching device is uncoupled with its dogs at their open state (CO), as in the case of the step of control of the state of the dogs (302) according to Claim 3.

6. The method according to Claim 5, **characterized in that** a step (406) of maintaining active hybridisation occurs when the step of control of the state of the dogs (404) specifies that the dogs are at their open state (CO).

7. The method according to Claim 5, **characterized in that** a step (408) of stopping active hybridisation occurs when the step of control of the state of the dogs (404) specifies that the dogs are at their closed state (CF) or when the step (402) of verification of the state of the first traction chain specifies that this traction chain is an uncoupling situation (AVD).

8. The method according to any one of the preceding claims, **characterized in that**, for the first traction chain having its heat engine (MTH) associated on the one hand with a clutch (EMB) or a torque converter, and on the other hand with a gearbox (BV) connected to the first driving wheels (16) of the first running gear (12), in the case of change of gear ratio during the determining of the coupling situation (AVC) or of the uncoupling situation (AVD) of the first traction chain, this traction chain is, however, considered as coupled even if a momentary interruption to torque occurs during the gear change.

9. A hybrid drive system for a hybrid vehicle with a front running gear and a rear running gear, including on the one hand a powertrain (20) provided with a heat engine (MTH) suited to be connected to first driving wheels (16) of a first running gear (12) among said running gears in a first traction chain, and on the other hand a hybridisation machine (MELAR) connected to a dog-clutching device (30) suited to be interposed between said hybridisation machine and second driving wheels (16) of a second running gear system (14) among said running gears, the system including in addition a supervision system (42) configured to command said engine and said machine, implementing the method according to any one of the preceding claims such that the first traction chain and the second running gear system can not be simultaneously free-wheeling when the vehicle is in motion.

10. The drive system according to the preceding claim, in which the hybridisation machine (MELAR) is an electric machine.
